# EUROPEAN PATENT SPECIFICATION

(11) **EP 3 532 763 B1**
(45) Date of publication and mention of the grant of the patent: **07.06.2023**
(21) Application number: 17804658.7
(22) Date of filing: 26.10.2017
(51) Int. Cl.: F16M 11/04, F16M 13/02, F16M 11/14, B60R 11/02, B62J 11/00, B60R 11/00, B62J 50/21, H04M 1/04, H04B 1/3888

(54) **SUPPORT APPARATUS FOR PORTABLE COMMUNICATION DEVICES ABLE TO BE APPLIED ON A MOTORCYCLE**
STÜTZVORRICHTUNG FÜR TRAGBARE KOMMUNIKATIONSVORRICHTUNGEN ZUR ANWENDUNG AUF EINEM MOTORRAD
APPAREIL SUPPORT POUR DISPOSITIFS DE COMMUNICATION PORTABLES APTES À ÊTRE APPLIQUÉS SUR UNE MOTOCYCLETTE

(30) Priority: 28.10.2016 IT 201600109297
(43) Date of publication of application: 04.09.2019
(73) Proprietor: Givi S.p.A., 25020 Flero (BS) (IT)
(72) Inventor: VISENZI, Giuseppe, 25123 Brescia (IT)
(74) Representative: Branca, Emanuela
(86) International application number: PCT/IB2017/056658
(87) International publication number: WO 2018/078564

(56) References cited:
- US-A1- 2013 146 632
- US-A1- 2013 248 569
- US-A1- 2016 159 291
- US-B1- 8 998 048

## Description

The present invention relates to a support apparatus for portable communication devices, for example cellular phones, smartphones and satellite navigators, able to be applied in particular on a motorcycle.

A satellite navigator is a digital electronic device provided with the capability of receiving the GPS (Global Positioning System) radio satellite signal, integrated with a road database system. A satellite navigator is designed to assist the driver of a vehicle in road navigation, indicating interactively to him/her the route to be followed to reach any destination preset by the driver him/herself starting from his/her initial position.

A smartphone is a transmitting and receiving mobile radio device with computation, memory and data connection capabilities, based on an operating system for mobile devices and often provided with its own satellite navigation system. Hence, a smartphone can be used by the driver of a vehicle not only to verify the arrival of telephone calls, but also to set and identify a determined route.

Containers and/or support devices are known, which enable the driver of a motor vehicle, typically an automobile or a truck, temporarily to fix a smartphone and/or a satellite navigator on the windshield or on the dashboard of the motor vehicle. In this way, the driver of the motor vehicle can make use of determined features of the aforesaid devices without compromising driving safety.

Recently, containers and/or support apparatuses have been proposed on the market which make it possible to temporarily fix a smartphone and/or a satellite navigator on the handlebar of a motorcycle. The motorcyclist, too, then, can verify the arrival of telephone calls or use the satellite navigation feature of a smartphone while riding his/her own motorcycle.

These containers for smartphones and/or satellite navigators able to be applied on motorcycles can be both integrated on the handlebar of the motorcycle, and provided with a hooking system designed to be reversibly coupled, in the best possible way, with the components of the steering system of one or more different motorcycles. Moreover, since smartphones and satellite navigators having highly different shapes and dimensions exist on the market, containers must be adequately dimensioned to effectively retain most smartphones and satellite navigators present on the market. A similar support is known from document US8998048 B1.

For example, a known embodiment of a container for smartphones and/or satellite navigators consists of a small semi-rigid bag. Hence, it is readily apparent that there is a need to provide bags of various dimensions in relation to the dimensions of the very numerous models of smartphones and satellite navigators present on the market.

In addition, known bags are normally provided with at least one transparent wall that enables users to view the screen of the smartphone and/or of the satellite navigator when it is housed in the respective bag. While on one hand this transparent wall provides protection for the device contained in the bag, on the other hand it may compromise the visibility of the screen of the device itself, for example because of the presence of light reflexes or of condensation.

An object of the present invention therefore is to provide a support apparatus for portable communication devices, for example cellular telephones, smartphones and satellite navigators, able to be applied in particular on a motorcycle, which is capable of solving the aforementioned drawbacks of the prior art in an extremely simple, economical and particularly functional manner.

In detail, an object of the present invention is to provide a support apparatus for portable communication devices able to be applied on a motorcycle that makes it possible to fix devices of different shape and dimensions in a simple and intuitive manner.

Another object of the present invention is to provide a support apparatus for portable communication devices able to be applied on a motorcycle that makes it possible to improve the visibility of the device.

These and other objects according to the present invention are achieving by providing a support apparatus for portable communication devices, for example cellular phones, smartphones and satellite navigators, able to be applied in particular on a motorcycle, as set forth in claim 1.

Further features of the invention are described by the dependent claims, which are an integral part of the present description.

The features and advantages of a support apparatus for portable communication devices able to be applied on a motorcycle according to the present invention will be more readily apparent from the following exemplifying and not limiting description, referred to the accompanying schematic drawings in which:
figure 1 is a perspective view of a preferred embodiment of the support apparatus for portable communication devices according to the present invention, whereon a generic smartphone is retained;
figure 2 is another perspective view of the apparatus of figure 1, without the presence of the smartphone;
figure 3 is another perspective view of the apparatus of figure 1, without the presence of the smartphone;
figure 4 is an exploded view showing all the components of the apparatus of figure 1;
figures 5 and 6 show the positioning of some components of the apparatus of figure 1 which are not visible when the apparatus is fully assembled; and
figure 7 shows the operation of the apparatus of figure 1 in a configuration that precedes the positioning of the smartphone.

With reference to the figures, a support apparatus for portable communication devices is indicated in its entirety with the reference number 10. The apparatus 10 comprises an upper fixing block 12, arranged to receive and retain a generic portable communication device 100, for example a smartphone or a satellite navigator, and a lower fixing block 14, arranged to be removably fixed on a generic motorcycle. The lower fixing block 14 can comprise a clamp 16 arranged to be rigidly fixed around a tubular component of the motorcycle, for example a component of the handlebar of such motorcycle.

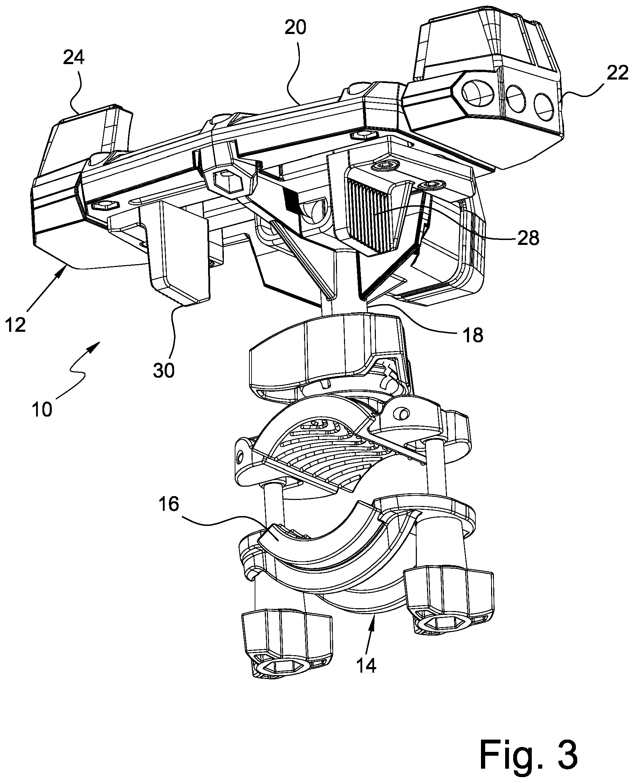

The upper fixing block 12 and the lower fixing block 14 are mutually joined by an articulated connecting means 18 (figure 3), for example a ball joint. The upper fixing block 12 is provided with a resting base 20 for the portable communication device 100. The resting base 20 is substantially flat and provided with a pair of lateral edges 20A and 20B substantially parallel to one another, as well as with a front edge 20C and a rear edge 20D, also substantially parallel to one another.

The upper fixing block 12 comprises a plurality di hooking means 22, 24 and 26 configured to retain the portable communication device 100 on the respective resting base 20. In detail, the upper fixing block 12 comprises a pair of lateral hooking means 22 and 24, positioned respectively at the intersection between the lateral edges 20A and 20B and the rear edge 20D of the resting base 20. Each lateral hooking means 22 and 24 has substantially "L" shape and it is thus configured to retain a portable communication device 100 at two respective corners.

The upper fixing block 12 then comprises at least one front hooking means 26, positioned at the front edge 20C of the resting base 20. Each front hooking means 26 has substantially flat shape and it is thus configured to retain a portable communication device 100 at a lateral edge thereof. Preferably, a single front hooking means 26 is provided, positioned at the median axis, or central axis, of the front edge 20C of the resting base 20.

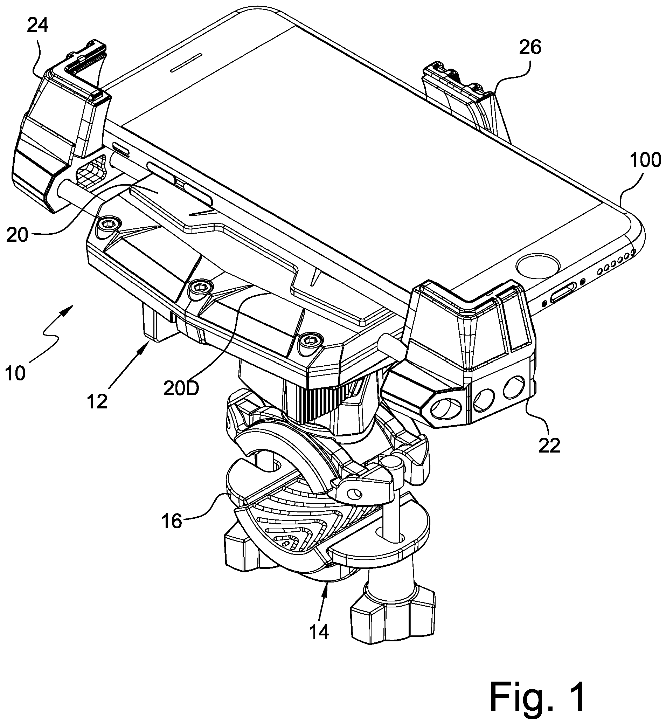

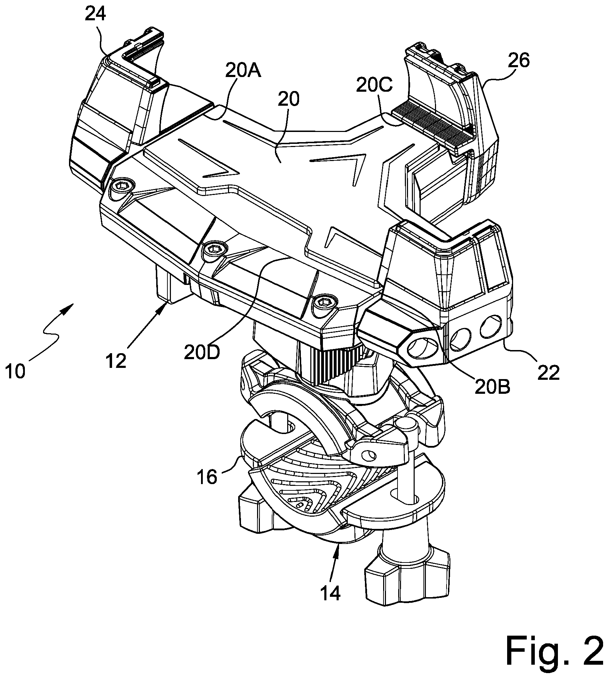

As shown in figure 3, each lateral hooking means 22 and 24 is provided below, i.e. below the resting base 20, with a respective opening lever 28 and 30. Each lateral hooking means 22 and 24 is provided with respective elastic connecting elements to the resting base 20. Each lateral hooking means 22 and 24 is then arranged to move from a first idle configuration, in which said lateral hooking means 22 and 24 are substantially in contact with the respective lateral edges 20A and 20B of the resting base 20 and in which the respective elastic connecting elements are substantially not biased (figure 2), to a second intermediate configuration, in which the respective elastic connecting elements of each lateral hooking means 22 and 24 are biased to move away, by a predefined and variable portion of length, said lateral hooking means 22, 24 from the respective lateral edges 20A, 20B of the resting base 20 (figure 1).

Similarly, front hooking means 26, too, is provided with respective elastic connecting elements to the resting base 20. The front hooking means 26 is in turn arranged to move from a first idle configuration, in which such front hooking means 26 is substantially in contact with the front edge 20C of the resting base 20 and in which the respective elastic connecting elements are substantially non biased (figure 2), to a second intermediate configuration, in which the elastic connecting elements of the front hooking means 26 are biased to move away, by a predefined and variable portion of length, such front hooking means 26 from the front edge 20C of the resting base 20 (figure 1).

It is thus possible to house and retain on the resting base 20 a portable communication device 100 of any dimensions in length and width, although substantially square or rectangular (as in fact are nearly all portable communication devices available on the market). The particular "L" shape of the lateral hooking means 22 and 24 makes superfluous the presence of additional hooking means positioned at the rear edge 20D of the resting base 20, which is the edge oriented towards the rider of the motorcycle. The visibility of the screen of the portable communication device 100 is thus total.

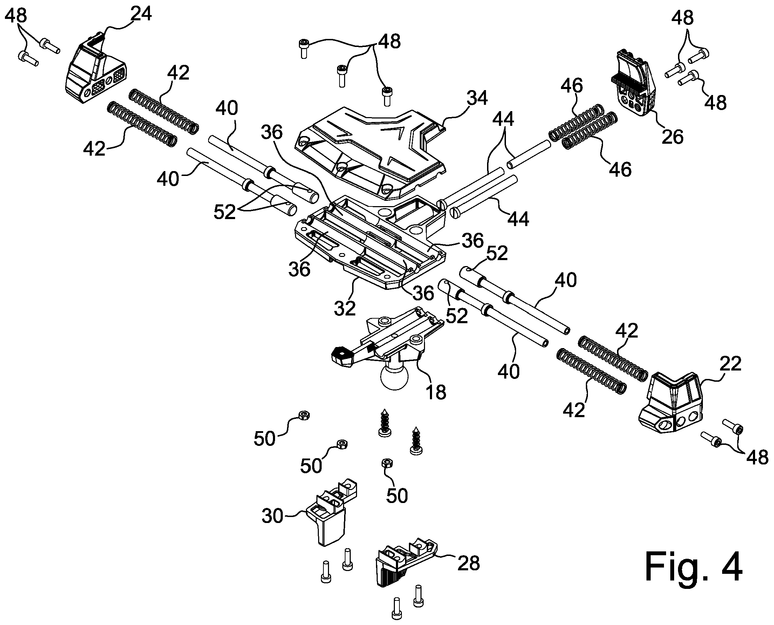

With reference to figure 4, which shows all the components of the apparatus 10, it is noted that the resting base 20 consists of a lower plate 32 and of an upper plate 34, mutually joined by screws 48 with respective clamping nuts 50. Both in the lower plate 32, and in the upper plate 34 of the resting base 20 lateral 36 and front 38 linear guides are obtained, inside which the elastic connecting elements of each lateral hooking means 22 and 24 and of the front hooking means 26 respectively slide.

In detail, the elastic connecting elements of each lateral hooking means 22, 24 are made of at least one lateral guide rod 40 and of a respective return spring 42, both operatively connected to a respective lateral hooking means 22, 24. Similarly, the elastic connecting elements of the front hooking means 26 are made of at least one front guide rod 44 and of a respective return spring 46, both operatively connected to such front hooking means 26.

Preferably, each lateral hooking means 22, 24 is provided with two respective lateral guide rods 40, parallel to one another, whereas the front hooking means 26 is provided with three front guide rods 44, at least two of which are parallel to one another. Also preferably, each lateral hooking means 22 and 24 and front hooking means 26 is fixed to the respective lateral guide rods 40 and front guide rods 44 by screws 48.

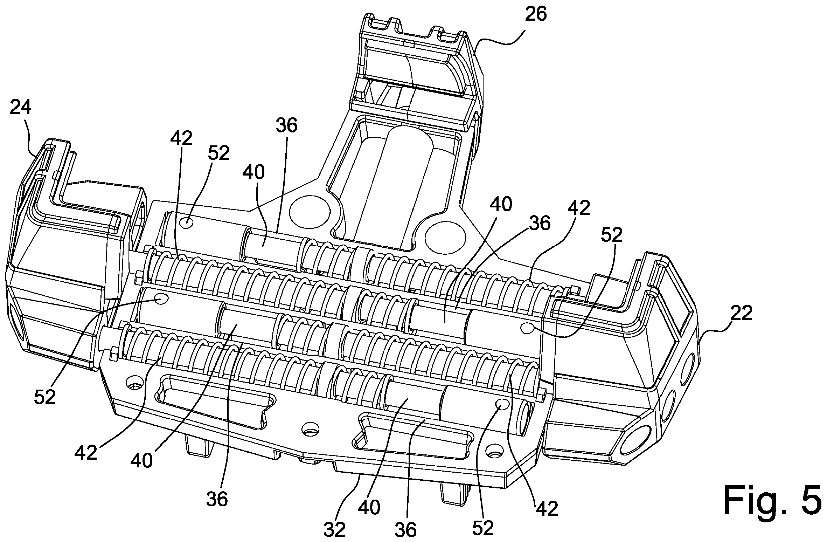

The return springs 42 for the two lateral guide rods 40 are fitted around said lateral guide rods 40. The assemblies thus made are then inserted, opposite two by two, into the lateral linear guides 36 obtained in the lower plate 32 and in the upper plate 34 of the resting base 20. The lateral guide rods 40 are screwed two by two to the opening levers 28 and 30. Each screw 48 is screwed on a thread 52 obtained on a proximal end of each lateral guide rod 40. On the distal end of each lateral guide rod 40 the lateral hooking means 22 and 24 are screwed. Lastly, the positioning of the lateral guide rods 40 is guaranteed by screwing the lower plate 32 to the upper plate 34. The positioning of these components, which are not visible when the apparatus 10 is fully assembled, is shown in figure 5.

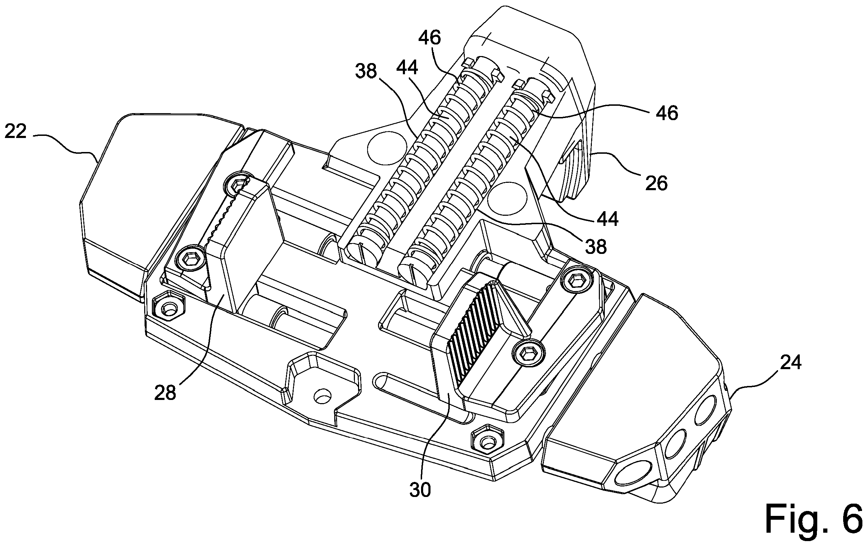

The mounting of the front hooking means 26, which is guided by three front guide rods 44, is also similar. On the two front guide rods 44, parallel to each other, are respectively fitted the two return springs 46, whereas the assemblies thus constituted are positioned in the two respective front linear guides 38 obtained in the lower plate 32 and in the upper plate 34 of the resting base 20. To the front guide rods 44 is then screwed the front hooking means 26 and the position of the entire assembly thus constituted is assured fixing the ball joint 18 to the resting base 20. The positioning of these components, which are not visible when the apparatus 10 is fully assembled, is shown in figure 6.

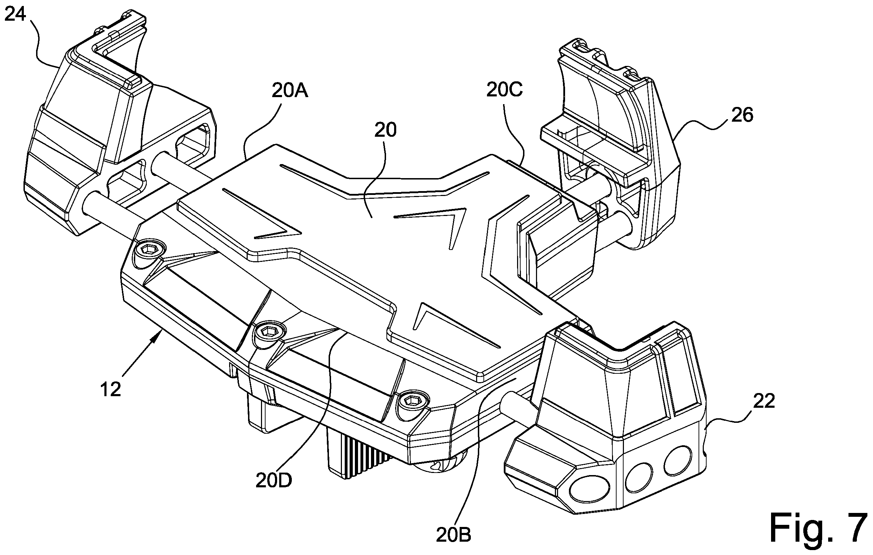

The operation of the apparatus 10 takes place in the following way. By moving the opening levers 28 and 30 closer to each other, a corresponding move of the lateral hooking means 22 and 24 away from the respective lateral edges 20A and 20B of the resting base 20 is generated, with the consequent compression of the return spring 42. It is then possible to act manually on the front hooking means 26, moving it away from the front edge 20C of the resting base 20 generating the compression of the respective return springs 42. This configuration of the apparatus 10 is shown in figure 7.

At this point, it is possible to rest portable communication devices 100 of various dimensions on the resting base 20, between the lateral hooking means 22 and 24 and the front hooking means 26. At the time the opening levers 28 and 30 and the front hooking means 26 are released, the reaction of the various return springs 42 tends to push all the lateral hooking means 22 and 24 and front hooking means 26 so as to abut against the respective edges and/or corners of the portable communication device 100, bringing all hooking means 22, 24 and 26 to the third configuration of closure or of engagement with such portable communication device 100. The portable communication device 100 is then retained and blocked on the apparatus 10, as shown for example in figure 1.

To improve the seal and the positioning of the apparatus 10 on the motorcycle, both at least the upper plate 34 of the resting base 20, and all lateral hooking means 22, 24 and front hooking means 26 are obtained by bi-injection moulding with two different types of materials (plastic and rubber), so that the part in contact with the portable communication device 100 is made of rubber. Changing the length of the guide rods 40 and 44 and the shape of the lateral hooking means 22, 24 and front hooking means 26 it is possible to create multiple versions of the apparatus 10, so as to adapt it in future also to portable communication devices 100 that will have different dimensions from the current ones. The spherical shape of the articulated connecting means 18 allows an effective capability of orienting the resting base 20, so as to optimise the visibility of the screen with respect to the riding position of the motorcycle rider.

It was thus seen that the support apparatus for portable communication devices able to be applied on a motorcycle according to the present invention achieves all the objects set out above.

The support apparatus for portable communication devices able to be applied on a motorcycle of the present invention thus conceived is susceptible to many modifications and variants, all falling within the same inventive concept; furthermore, all details can be replaced by equivalent technical elements. In practice, the materials used, as well as their shapes and dimensions, can be of any type according to the technical requirements.

The scope of protection of the invention is therefore defined by the appended claims.

## Claims

1. Support apparatus (10) for portable communication devices comprising:
- an upper fixing block (12), arranged to receive and retain a generic portable communication device (100); and
- a lower fixing block (14), arranged to be removably fixed on a motorcycle,
wherein the upper fixing block (12) and the lower fixing block (14) are mutually joined by an articulated connecting means (18) and wherein the upper fixing block (12) comprises:
- a resting base (20) for the portable communication device (100), said resting base (20) being substantially flat and being provided with a pair of side edges (20A, 20B) substantially parallel to each other, as well as with a front edge (20C) and a rear edge (20D), also substantially parallel to each other, the resting base (20) being made of a lower plate (32) and of an upper plate (34), mutually joined by screws (48) with respective clamping nuts (50) ;
- a pair of side hooking means (22, 24), respectively placed at the intersection between the side edges (20A, 20B) and the rear edge (20D) of the resting base (20); and
- at least one front hooking means (26), placed at the front edge (20C) of the resting base (20),
wherein each side hooking means (22, 24) and said at least one front hooking means (26) are provided with respective elastic connecting elements (40, 42; 44, 46) on the resting base (20), each of said side hooking means (22, 24) and said at least one front hooking means (26) being arranged to move between:
- a first idle configuration, wherein said side hooking means (22, 24) are substantially in contact with the respective side edges (20A, 20B) of the resting base (20), wherein said at least one front hooking means (26) is substantially in contact with the front edge (20C) of the resting base (20) and wherein the respective elastic connecting elements (40, 42; 44, 46) are substantially not biased;
- a second intermediate configuration, wherein the respective elastic connecting elements (40, 42; 44, 46) of each side hooking means (22, 24) and of said at least one front hooking means (26) are biased in order to move away, for a predefined and variable section of length, said side hooking means (22, 24) from the respective side edges (20A, 20B) of the resting base (20) and said at least one front hooking means (26) from the front edge (20C) of the resting base (20), and wherein it is possible to rest the portable communication device (100) on the resting base (20), between the side (22, 24) and front (26) hooking means; and
- a third closing configuration, wherein the reaction of the elastic connecting elements (40, 42; 44, 46) pushes all the side (22, 24) and front (26) hooking means so as to abut against respective edges and/or corners of the portable communication device (100), which is then retained and blocked on the apparatus (10),
**characterized in that** both in the lower plate (32) and in the upper plate (34) of the resting base (20) side (36) and front (38) linear guides are obtained, inside which the elastic connecting elements (40, 42; 44, 46) of each side hooking means (22, 24) and of said at least one front hooking means (26) respectively slide, the elastic connecting elements (40, 42) of each side hooking means (22, 24) being made of at least one side guide rod (40) and of a respective return spring (42), both operatively connected to a respective side hooking means (22, 24),
wherein each side hooking means (22, 24) is provided below the resting base (20) with a respective opening lever (28, 30), by moving the opening levers (28, 30) closer to each other, a corresponding movement of the lateral hooking means (22, 24) away from the respective lateral edges (20A, 20B) of the resting base (20) being generated with the consequent compression of the return spring (42).

2. Apparatus (10) according to claim 1, **characterized in that** each side hooking means (22, 24) has substantially the shape of a L and is therefore configured to retain a portable communication device (100) at two respective corners.

3. Apparatus (10) according to claim 1 or 2, **characterized in that** each front hooking means (26) has substantially a flat shape and is therefore configured to retain a portable communication device (100) at one side edge thereof.

4. Apparatus (10) according to claim 3, **characterized in that** it comprises a single front hooking means (26), placed at the median axis, or central axis, of the front edge (20C) of the resting base (20).

5. Apparatus (10) according to any one of claims 1 to 4, **characterized in that** the elastic connecting elements (44, 46) of said at least one front hooking means (26) are made of at least one front guide rod (44) and of a respective return spring (46), both operatively connected to said at least one front hooking means (26).

6. Apparatus (10) according to claim 5, **characterized in that** each side hooking means (22, 24) is provided with two respective side guide rods (40), parallel to each other, whereas said at least one front hooking means (26) is provided with three front guide rods (44), at least two of them parallel to each other.

7. Apparatus (10) according to claim 6, **characterized in that** the return springs (42) for the two side guide rods (40) are fitted around said side guide rods (40) and the assemblies created in this way are inserted, opposite two by two, in the side linear guides (36) obtained in the lower plate (32) and in the upper plate (34) of the resting base (20), wherein the side guide rods (40) are screwed two by two to the opening levers (28, 30), wherein each screw (48) is screwed on a thread (52) obtained on a proximal end of each side guide rod (40), wherein on the distal end of each side guide rod (40) the side hooking means (22, 24) are screwed and wherein the positioning of the side guide rods (40) is guaranteed by screwing the lower plate (32) to the upper plate (34).

8. Apparatus (10) according to claim 6 or 7, **characterized in that** on the two front guide rods (44) parallel to each other are respectively fitted the two return springs (46) and the assemblies created in this way are positioned in the two respective front linear guides (38) obtained in the lower plate (32) and in the upper plate (34) of the resting base (20), wherein said at least one front hooking means (26) is screwed on said front guide rods (44) and wherein the position of the total assembly created in this way is guaranteed by fixing the articulated connecting means (18) to the resting base (20).

9. Apparatus (10) according to any one of the previous claims , **characterized in that** both at least the upper plate (34) of the resting base (20) and all the side (22, 24) and front (26) hooking means are obtained through bi-injection moulding with two different materials.

10. Apparatus (10) according to any one of the previous claims, **characterized in that** the articulated connecting means (18) is made by a ball joint.

11. Apparatus (10) according to any one of the previous claims, **characterized in that** the lower fixing block (14) comprises a clamp (16) arranged to be rigidly fixed around a tubular component of the motorcycle.

## Patentansprüche

1. Stützvorrichtung (10) für tragbare Kommunikationsvorrichtungen, umfassend:
- einen oberen Befestigungsblock (12), der so angeordnet ist, dass er eine allgemeine tragbare Kommunikationsvorrichtung (100) aufnimmt und festhält; und
- einen unteren Befestigungsblock (14), der so angeordnet ist, dass er abnehmbar an einem Motorrad befestigt werden kann,
wobei der obere Befestigungsblock (12) und der untere Befestigungsblock (14) durch ein gelenkiges Verbindungsmittel (18) miteinander verbunden sind und wobei der obere Befestigungsblock (12) umfasst:
- eine Auflagebasis (20) für die tragbare Kommunikationsvorrichtung (100), wobei die Auflagebasis (20) im Wesentlichen flach ist und mit einem Paar von Seitenkanten (20A, 20B), die im Wesentlichen parallel zueinander sind, sowie mit einer Vorderkante (20C) und einer Hinterkante (20D), die ebenfalls im Wesentlichen parallel zueinander sind, versehen ist, wobei die Auflagebasis (20) aus einer unteren Platte (32) und einer oberen Platte (34) hergestellt ist, die durch Schrauben (48) mit entsprechenden Klemmmuttern (50) miteinander verbunden sind;
- ein Paar seitlicher Einhakmittel (22, 24), die jeweils am Schnittpunkt zwischen den Seitenkanten (20A, 20B) und der Hinterkante (20D) der Auflagebasis (20) angeordnet sind; und
- mindestens ein vorderes Einhakmittel (26), das an der Vorderkante (20C) der Auflagebasis (20) angeordnet ist,
wobei jedes seitliche Einhakmittel (22, 24) und das mindestens eine vordere Einhakmittel (26) mit entsprechenden elastischen Verbindungselementen (40, 42; 44, 46) auf der Auflagebasis (20) versehen sind, wobei jedes der seitlichen Einhakmittel (22, 24) und das mindestens eine vordere Einhakmittel (26) so angeordnet sind, dass sie sich bewegen zwischen:
- einer ersten Leerlaufkonfiguration, in der die seitlichen Einhakmittel (22, 24) im Wesentlichen in Kontakt mit den jeweiligen Seitenkanten (20A, 20B) der Auflagebasis (20) sind, in der das mindestens eine vordere Einhakmittel (26) im Wesentlichen in Kontakt mit der Vorderkante (20C) der Auflagebasis (20) ist und in der die jeweiligen elastischen Verbindungselemente (40, 42; 44, 46) im Wesentlichen nicht vorgespannt sind;
- einer zweiten Zwischenkonfiguration, in der die jeweiligen elastischen Verbindungselemente (40, 42; 44, 46) jedes seitlichen Einhakmittels (22, 24) und des mindestens einen vorderen Einhakmittels (26) vorgespannt sind, um die seitlichen Einhakmittel (22, 24) über einen vordefinierten und variablen Längenabschnitt von den jeweiligen Seitenkanten (20A, 20B) der Auflagebasis (20) und das mindestens eine vordere Einhakmittel (26) von der Vorderkante (20C) der Auflagebasis (20) wegzubewegen, und wobei es möglich ist, die tragbare Kommunikationsvorrichtung (100) auf der Auflagebasis (20) zwischen den seitlichen (22, 24) und vorderen (26) Einhakmitteln aufzulegen; und
- einer dritten Schließkonfiguration, in der die Reaktion der elastischen Verbindungselemente (40, 42; 44, 46) alle seitlichen (22, 24) und vorderen (26) Einhakmittel so drückt, dass sie an den jeweiligen Kanten und/oder Ecken der tragbaren Kommunikationsvorrichtung (100)anliegen, das dann auf der Vorrichtung (10) festgehalten und blockiert wird,
**dadurch gekennzeichnet, dass** sowohl in der unteren Platte (32) als auch in der oberen Platte (34) der Auflagebasis (20) seitliche (36) und vordere (38) lineare Führungen ausgebildet sind, in denen die elastischen Verbindungselemente (40, 42; 44, 46) jedes seitlichen Einhakmittels (22, 24) und des mindestens einen vorderen Einhakmittels (26) gleiten, wobei die elastischen Verbindungselemente (40, 42) jedes seitlichen Einhakmittels (22, 24) aus mindestens einer seitlichen Führungsstange (40) und einer entsprechenden Rückholfeder (42) bestehen, die beide mit einem entsprechenden seitlichen Einhakmittel (22, 24) wirkverbunden sind,
wobei jedes seitliche Einhakmittel (22, 24) unterhalb der Auflagebasis (20) mit einem jeweiligen Öffnungshebel (28, 30) versehen ist, wobei durch eine Annäherung der Öffnungshebel (28, 30) aneinander eine entsprechende Bewegung der seitlichen Einhakmittel (22, 24) weg von den jeweiligen Seitenkanten (20A, 20B) der Auflagebasis (20) mit der daraus folgenden Kompression der Rückholfeder (42) erzeugt wird.

2. Vorrichtung (10) nach Anspruch 1, **dadurch gekennzeichnet, dass** jedes seitliche Einhakmittel (22, 24) im Wesentlichen die Form eines L aufweist und daher so konfiguriert ist, dass es eine tragbare Kommunikationsvorrichtung (100) an zwei jeweiligen Ecken festhält.

3. Vorrichtung (10) nach Anspruch 1 oder 2, **dadurch gekennzeichnet, dass** jedes vordere Einhakmittel (26) im Wesentlichen eine flache Form aufweist und daher so konfiguriert ist, dass es eine tragbare Kommunikationsvorrichtung (100) an einer Seitenkante davon festhält.

4. Vorrichtung (10) nach Anspruch 3, **dadurch gekennzeichnet, dass** sie ein einziges vorderes Einhakmittel (26) umfasst, das auf der Mittelachse oder der zentralen Achse der Vorderkante (20C) der Auflagebasis (20) angeordnet ist.

5. Vorrichtung (10) nach einem der Ansprüche 1 bis 4, **dadurch gekennzeichnet, dass** die elastischen Verbindungselemente (44, 46) des mindestens einen vorderen Einhakmittels (26) aus mindestens einer vorderen Führungsstange (44) und einer entsprechenden Rückholfeder (46) bestehen, die beide mit dem mindestens einen vorderen Einhakmittel (26) wirkverbunden sind.

6. Vorrichtung (10) nach Anspruch 5, **dadurch gekennzeichnet, dass** jedes seitliche Einhakmittel (22, 24) mit zwei jeweiligen seitlichen Führungsstangen (40) versehen ist, die parallel zueinander sind, während das mindestens eine vordere Einhakmittel (26) mit drei vorderen Führungsstangen (44) versehen ist, von denen mindestens zwei parallel zueinander sind.

7. Vorrichtung (10) nach Anspruch 6, **dadurch gekennzeichnet, dass** die Rückholfedern (42) für die beiden seitlichen Führungsstangen (40) um die seitlichen Führungsstangen (40) herum angebracht sind und die so gebildeten Baugruppen paarweise gegenüberliegend in die seitlichen linearen Führungen (36) eingesetzt werden, die in der unteren Platte (32) und in der oberen Platte (34) der Auflagebasis (20) ausgebildet sind, wobei die seitlichen Führungsstangen (40) paarweise an die Öffnungshebel (28, 30) geschraubt werden, wobei jede Schraube (48) auf ein Gewinde (52) geschraubt wird, das an einem proximalen Ende jeder seitlichen Führungsstange (40) erhalten wird, wobei auf das distale Ende jeder seitlichen Führungsstange (40) die seitlichen Einhakmittel (22, 24) geschraubt werden und wobei die Positionierung der seitlichen Führungsstangen (40) durch Verschrauben der unteren Platte (32) mit der oberen Platte (34) gewährleistet wird.

8. Vorrichtung (10) nach Anspruch 6 oder 7, **dadurch gekennzeichnet, dass** auf den beiden vorderen Führungsstangen (44), die parallel zueinander sind, jeweils die beiden Rückholfedern (46) angebracht sind und die so gebildeten Baugruppen in den beiden jeweiligen vorderen linearen Führungen (38) positioniert sind, die in der unteren Platte (32) und in der oberen Platte (34) der Auflagebasis (20) ausgebildet sind, wobei das mindestens eine vordere Einhakmittel (26) auf die vorderen Führungsstangen (44) geschraubt ist und wobei die Position der so gebildeten Gesamtbaugruppe durch die Befestigung der gelenkigen Verbindungsmittel (18) an der Auflagebasis (20) gewährleistet wird.

9. Vorrichtung (10) nach einem der vorstehenden Ansprüche, **dadurch gekennzeichnet, dass** sowohl mindestens die obere Platte (34) der Auflagebasis (20) als auch alle seitlichen (22, 24) und vorderen (26) Einhakmittel durch Bi-Spritzgießen mit zwei verschiedenen Materialien hergestellt sind.

10. Vorrichtung (10) nach einem der vorstehenden Ansprüche, **dadurch gekennzeichnet, dass** die gelenkigen Verbindungsmittel (18) aus einem Kugelgelenk bestehen.

11. Vorrichtung (10) nach einem der vorstehenden Ansprüche, **dadurch gekennzeichnet, dass** der untere Befestigungsblock (14) eine Klammer (16) umfasst, die so angeordnet ist, dass sie starr um ein rohrförmiges Bauteil des Motorrads befestigt werden kann.

## Revendications

1. Appareil support (10) pour dispositifs de communication portables comprenant:
- un bloc de fixation supérieur (12), agencé pour recevoir et retenir un dispositif de communication portable générique (100); et
- un bloc de fixation inférieur (14), agencé pour être fixé de manière amovible sur une motocyclette,
dans lequel le bloc de fixation supérieur (12) et le bloc de fixation inférieur (14) sont mutuellement joints par un moyen de liaison articulé (18) et dans lequel le bloc de fixation supérieur (12) comprend:
- une base d'appui (20) pour le dispositif de communication portable (100), ladite base d'appui (20) étant sensiblement plate et étant pourvue d'une paire de bords latéraux (20A, 20B) sensiblement parallèles l'un à l'autre, ainsi que d'un bord avant (20C) et d'un bord arrière (20D), également sensiblement parallèles l'un à l'autre, la base d'appui (20) étant constituée d'une plaque inférieure (32) et d'une plaque supérieure (34), mutuellement jointes par des vis (48) avec des écrous de serrage respectifs (50);
- une paire de moyens d'accrochage latéraux (22, 24), placés respectivement à l'intersection entre les bords latéraux (20A, 20B) et le bord arrière (20D) de la base d'appui (20); et
- au moins un moyen d'accrochage avant (26), placé au niveau du bord avant (20C) de la base d'appui (20),
dans lequel chaque moyen d'accrochage latéral (22, 24) et ledit au moins un moyen d'accrochage avant (26) sont pourvus d'éléments de liaison élastiques respectifs (40, 42 ; 44, 46) sur la base d'appui (20), chacun desdits moyens d'accrochage latéraux (22, 24) et ledit au moins un moyen d'accrochage avant (26) étant agencé pour se déplacer entre:
- une première configuration de repos, dans laquelle lesdits moyens d'accrochage latéraux (22, 24) sont sensiblement en contact avec les bords latéraux respectifs (20A, 20B) de la base d'appui (20), dans laquelle ledit au moins un moyen d'accrochage avant (26) est sensiblement en contact avec le bord avant (20C) de la base d'appui (20) et dans laquelle les éléments de liaison élastiques respectifs (40, 42 ; 44, 46) ne sont sensiblement pas sollicités;
- une deuxième configuration intermédiaire, dans laquelle les éléments de liaison élastiques respectifs (40, 42 ; 44, 46) de chaque moyen d'accrochage latéral (22, 24) et dudit au moins un moyen d'accrochage avant (26) sont sollicités afin d'éloigner, sur une section de longueur prédéfinie et variable, lesdits moyens d'accrochage latéraux (22, 24) des bords latéraux respectifs (20A, 20B) de la base d'appui (20) et ledit au moins un moyen d'accrochage avant (26) du bord avant (20C) de la base d'appui (20), et dans laquelle il est possible de poser le dispositif de communication portable (100) sur la base d'appui (20), entre les moyens d'accrochage latéraux (22, 24) et avant (26); et
- une troisième configuration de fermeture, dans laquelle la réaction des éléments de liaison élastiques (40, 42 ; 44, 46) pousse tous les moyens d'accrochage latéraux (22, 24) et avant (26) de manière à ce qu'ils viennent en butée contre les bords et/ou les angles respectifs du dispositif de communication portable (100), qui est alors retenu et bloqué sur l'appareil (10),
**caractérisé en ce qu'**aussi bien dans la plaque inférieure (32) que dans la plaque supérieure (34) de la base d'appui (20), sont obtenus des guides linéaires latéraux (36) et avant (38), à l'intérieur desquels glissent respectivement les éléments de liaison élastiques (40, 42 ; 44, 46) de chaque moyen d'accrochage latéral (22, 24) et dudit au moins un moyen d'accrochage avant (26), les éléments de liaison élastiques (40, 42) de chaque moyen d'accrochage latéral (22, 24) étant constitués d'au moins une tige de guidage latérale (40) et d'un ressort de rappel respectif (42), tous deux reliés de manière opérationnelle à un moyen d'accrochage latéral respectif (22, 24),
dans lequel chaque moyen d'accrochage latéral (22, 24) est pourvu sous la base d'appui (20) d'un levier d'ouverture respectif (28, 30), en rapprochant les leviers d'ouverture (28, 30) l'un de l'autre, un mouvement correspondant des moyens d'accrochage latéraux (22, 24) s'éloignant des bords latéraux respectifs (20A, 20B) de la base d'appui (20) étant généré avec la compression qui résulte du ressort de rappel (42).

2. Appareil (10) selon la revendication 1, **caractérisé en ce que** chaque moyen d'accrochage latéral (22, 24) a sensiblement la forme d'un L et est donc conçu pour retenir un dispositif de communication portable (100) au niveau de deux angles respectifs.

3. Appareil (10) selon la revendication 1 ou 2, **caractérisé en ce que** chaque moyen d'accrochage avant (26) a sensiblement une forme plate et est donc conçu pour retenir un dispositif de communication portable (100) au niveau d'un de ses bords latéraux.

4. Appareil (10) selon la revendication 3, **caractérisé en ce qu'**il comprend un seul moyen d'accrochage avant (26), placé au niveau de l'axe médian, ou axe central, du bord avant (20C) de la base d'appui (20).

5. Appareil (10) selon l'une quelconque des revendications 1 à 4, **caractérisé en ce que** les éléments de liaison élastiques (44, 46) dudit au moins un moyen d'accrochage avant (26) sont constitués d'au moins une tige de guidage avant (44) et d'un ressort de rappel respectif (46), tous deux reliés de manière opérationnelle audit au moins un moyen d'accrochage avant (26).

6. Appareil (10) selon la revendication 5, **caractérisé en ce que** chaque moyen d'accrochage latéral (22, 24) est muni de deux tiges de guidage latérales respectives (40), parallèles l'une à l'autre, tandis que ledit au moins un moyen d'accrochage avant (26) est muni de trois tiges de guidage avant (44), au moins deux d'entre elles étant parallèles l'une à l'autre.

7. Appareil (10) selon la revendication 6, **caractérisé en ce que** les ressorts de rappel (42) pour les deux tiges de guidage latérales (40) sont montés autour desdites tiges de guidage latérales (40) et les ensembles ainsi créés sont insérés, opposés deux par deux, dans les guides linéaires latéraux (36) obtenus dans la plaque inférieure (32) et dans la plaque supérieure (34) de la base d'appui (20), dans lequel les tiges de guidage latérales (40) sont vissées deux par deux aux leviers d'ouverture (28, 30), dans lequel chaque vis (48) est vissée sur un filet (52) obtenu sur une extrémité proximale de chaque tige de guidage latérale (40), dans lequel sur l'extrémité distale de chaque tige de guidage latérale (40), les moyens d'accrochage latéraux (22, 24) sont vissés et dans lequel le positionnement des tiges de guidage latérales (40) est garanti par le vissage de la plaque inférieure (32) à la plaque supérieure (34).

8. Appareil (10) selon la revendication 6 ou 7, **caractérisé en ce que** sur les deux tiges de guidage avant (44) parallèles l'une à l'autre, sont respectivement montés les deux ressorts de rappel (46) et les ensembles ainsi créés sont positionnés dans les deux guides linéaires avant respectifs (38) obtenus dans la plaque inférieure (32) et dans la plaque supérieure (34) de la base d'appui (20), dans lequel ledit au moins un moyen d'accrochage avant (26) est vissé sur lesdites tiges de guidage avant (44) et dans lequel la position de l'ensemble total ainsi créé est garantie par la fixation du moyen de liaison articulé (18) à la base d'appui (20).

9. Appareil (10) selon l'une quelconque des revendications précédentes, **caractérisé en ce que** tant au moins la plaque supérieure (34) de la base d'appui (20) que tous les moyens d'accrochage latéraux (22, 24) et avant (26) sont obtenus par moulage par bi-injection avec deux matériaux différents.

10. Appareil (10) selon l'une quelconque des revendications précédentes, **caractérisé en ce que** le moyen de liaison articulé (18) est constitué d'une rotule.

11. Appareil (10) selon l'une quelconque des revendications précédentes, **caractérisé en ce que** le bloc de fixation inférieur (14) comprend une pince (16) agencée pour être fixée rigidement autour d'un composant tubulaire de la motocyclette.
